# EUROPÄISCHE PATENTANMELDUNG

(11) **EP 1 195 946 A2**
(43) Veröffentlichungstag der Anmeldung: **10.04.2002**
(21) Anmeldenummer: 01440320.8
(22) Anmeldetag: 01.10.2001
(51) Int. Cl.: H04L 12/24, H04Q 3/00

(54) **Verfahren zur Erbringung von Diensten in einem Netzwerk-Management-System mit einer offenen Systemarchitektur sowie Dienst-Objekt, Anforderungs-Objekt und Anforderungs-Manager hierzu**

(30) Priorität: 05.10.2000 DE 10049619
(71) Anmelder: ALCATEL, 75008 Paris (FR)
(72) Erfinder: Takats, Martin, Dr., 12619 Berlin (DE)
(74) Vertreter: Zinsinger, Norbert

(57) **Zusammenfassung**

Die vorliegende Erfindung betrifft ein Verfahren zur Erbringung von Diensten, insbesondere in einem Netzwerk-Management-System (NMS) mit einer offenen Systemarchitektur, sowie ein Dienst-Objekt (DO1, DO2), ein Anforderungs-Objekt (MO1, MO2) und einen Anforderungs-Manager (RM) hierzu.

Bei dem Verfahren wird dem Dienst-Objekt (DO1, DO2) zumindest ein erster und ein zweiter Objektname (DON1, DON2, DON3, DON4) zugeordnet. Das Anforderungs-Objekt (MO1, MO2) versendet an das Dienst-Objekt (DO1, DO2) eine Anforderungsnachricht (AN1, AN2, AN3, AN4), in der der erste oder der zweite Objektname (DON1, DON2, DON3, DON4) als Adressangabe für das Dienst-Objekt (DO1, DO2) angegeben sind. Das Dienst-Objekt (DO1, DO2) erbringt in Abhängigkeit des jeweils in der Anforderungsnachricht (AN1, AN2, AN3, AN4) verwendeten ersten oder zweiten Objektnamens (DON1, DON2, DON3, DON4) zumindest einen ersten bzw. einen zweiten Dienst.

## Beschreibung

Die vorliegende Erfindung betrifft ein Verfahren zur Erbringung von Diensten, insbesondere in einem Netzwerk-Management-System mit einer offenen Systemarchitektur, sowie ein Dienst-Objekt, ein Anforderungs-Objekt und einen Anforderungs-Manager hierzu.

Bei bekannten Systemen mit einer offenen Systemarchitektur, beispielsweise einem Netzwerk-Management-System, mit dem ein Rechnernetzwerk, z.B. ein Telekommunikationsnetz verwaltet und gesteuert wird, werden Dienste durch sogenannte Dienst-Objekte für die jeweiligen Dienste anfordernde Anforderungs-Objekte erbracht.

In einem ersten Beispiel wird das Anforderungs-Objekt durch einen auf einem Client-Rechner ausgeführten Abfrageprozess gebildet, der Datenbank-Abfragenachrichten an einen Datenbank-Prozess sendet, der von einem Server-Rechner ausgeführt wird und als Dienst-Objekt zur Abfrage einer dort gespeicherten Datenbank dient. Der Abfrageprozess muss dem Datenbank-Prozess in den Datenbank-Abfragenachrichten jeweils genau und umfassend die Abfragekriterien angeben, nach denen die Datenbank-Abfrage erfolgen soll. Zur Bildung komplexer Datenbank-Abfragenachrichten muss viel "Intelligenz" im Anforderungs-Objekt vorhanden sein, so dass dieses nur unter hohen Aufwand zu erstellen ist und beispielsweise eine komplexe Programmierung erfordert. Zudem sind die Datenbank-Abfragenachrichten kompliziert aufgebaut und benötigen für die Übermittlung der Abfragekriterien Übertragungskapazität.

Ein solches Anforderungs-Objekt ist beispielsweise ein Management-Objekt, das sogenannte verwaltete Objekte (engl. managed objects) verwaltet, die beispielsweise eine Vermittlungsstelle, einen Router oder einen Netzwerk-Dienst repräsentieren. Bei dem Management-Objekt handelt es sich beispielsweise um einen Rechner einer Netzwerk-Management-Zentrale oder einen durch einen solchen Rechner ausgeführten Netzwerk-Management-Prozess. Das Management-Objekt benötigt Informationen über den jeweiligen Status des verwalteten Objektes. Dazu sendet dieses sogenannte Ereignismeldungen, die beispielsweise eine Störung im verwalteten Objekt, die Überschreitung eines Grenzwertes oder die Änderung des Konfigurationszustandes des verwalteten Objektes betreffen. Das Management-Objekt zeigt die Ereignismeldungen z.B. an einer Bedieneroberfläche an und sendet beispielsweise zur Behebung eines Störungszustandes Steuerbefehle das an das Rechnernetzwerk und/oder das verwaltete Objekt.

Die Ereignismeldungen werden typischerweise jedoch nicht unmittelbar von den verwalteten Objekten an das ihnen zugeordnete Management-Objekt gesandt, sondern über sogenannte Event Forwarding Diskriminatoren (EFD), die die Ereignismeldungen anhand von als "discriminiator construct" bezeichneter Filterkriterien filtern und an das Management-Objekt nur die für es relevanten Ereignismeldungen berichten. Ein EFD bildet dabei ein - auch "Dienst-Agent" genanntes - Dienst-Objekt, das für das Management-Objekt einen Dienst, nämlich das Filtern der Ereignismeldungen durchführt. Eine Definition für einen EFD kann z.B. aus der ITU-Recommendation X.734 (ITU = International Telecommunication Union) entnommen werden.

Als Ereignismeldungen werden Meldungen bezeichnet, die spontan bei Eintreten eines Ereignisses gesendet werden, während Ereigniszustandsnachrichten Ereignisse betreffen, die bereits länger zurückliegen können. Mit einem Oberbegriff "Ereignisinformationen" werden Ereignismeldungen und Ereigniszustandsnachrichten bezeichnet. Ereigniszustände und Ereignismeldungen betreffen nicht nur übliche Objektattribute, beispielsweise "in Betrieb" oder "außer Betrieb", sondern beispielsweise auch sogenannte Environmental-Alarme, mit denen z.B. ein Feueralarm gemeldet wird.

Jeweils ein EFD ist jeweils einem oder mehreren verwalteten Objekten zugeordnet und filtert anhand der vorbestimmten Filterkriterien diejenigen der Ereignismeldungen aus, die für das Management-Objekt irrelevant sind. Somit ist jeweils für ein einzelnes oder für eine Gruppe von verwalteten Objekten ein mit individuellen Filterkriterien arbeitender EFD als Dienst-Objekt erforderlich. Die jeweiligen Dienst-Objekte müssen in jedem Fall individuell konfiguriert und möglicherweise sogar individuell, z.B. durch geeignete Programmierung, gestaltet sein. Zudem muss das jeweilige Netzwerk-Management-System zahlreiche Dienst-Objekte betreiben, was zu einer erheblichen Systembelastung führt.

Es ist daher Aufgabe der vorliegenden Erfindung, die Erbringung von Diensten durch Dienst-Objekte in einem System mit einer offenen Systemarchitektur, insbesondere in einem Netzwerk-Management-System, zu optimieren.

Diese Aufgabe wird gelöst durch ein Verfahren gemäß der technischen Lehre des Anspruchs 1. Ferner sind zur Lösung der Aufgabe ein Dienst-Objekt gemäß der technischen Lehre des Anspruchs 8, ein Anforderungs-Objekt gemäß der technischen Lehre des Anspruchs 10 sowie ein Anforderungs-Manager gemäß der technischen Lehre des Anspruchs 12 vorgesehen.

Der Erfindung liegt dabei der Gedanke zugrunde, dass ein Dienst-Objekt oder ein Dienst-Agent unter verschiedenen logischen Objektnamen oder Agentennamen von einem Anforderungs-Objekt sozusagen angesprochen wird und jeweils den logischen Objektnamen zugeordnete Dienste erbringt. Bei dem Dienst-Objekt und dem Anforderungs-Objekt handelt es sich vorzugsweise jeweils um einen Prozess oder eine Gruppe von Prozessen, die jeweils von einem oder mehreren Rechnern ausgeführt werden, oder um einen Dienst-Rechner bzw. um einen Anforderungs-Rechner. Ein Dienst-Objekt kann dabei einem oder mehreren Anforderungs-Objekten zugeordnet sein. So kann es beispielsweise unter einem ersten Objektnamen einem ersten Anforderungs-Objekt zugeordnet sein und unter einem zweiten Objektnamen vorzugsweise einem zweiten Anforderungs-Objekt oder ebenfalls dem ersten Anforderungs-Objekt. Je nach dem, welcher logische Objektnamen in der jeweiligen Anforderung verwendet wurde, erbringt das Dienst-Objekt einen vorbestimmten Dienst. Ein einziges physikalisches Dienst-Objekt simuliert dabei mehrere logische Dienst-Objekte und vermindert somit die Systemlast in einem Netzwerk-Management-System. Ferner wird der Wartungsaufwand verringert, da nicht mehrere individuelle physikalische Dienst-Objekte gewartet werden müssen, sondern lediglich ein einziges, mehrere logische Dienst-Objekte oder Dienst-Agenten simulierendes Dienst-Objekt.

In dem eingangs genannten Beispiel sendet das Anforderungs-Objekt, also der von einem Client-Rechner ausgeführte Abfrageprozess, an den von dem Server-Rechner ausgeführten, ein Dienst-Objekt bildenden Datenbank-Prozess Datenbank-Abfragenachrichten, in denen je nach für die Datenbank-Abfrage von dem Dienst-Objekt anzuwendenden ersten oder zweiten Abfragekriterien beispielsweise ein erster oder ein zweiter dem Abfrageprozess zugeordneter Objektnamen angegeben ist. Die Abfragekriterien an sich sind in den Abfragenachrichten nicht enthalten, so dass die Abfragenachrichten leicht zu bilden sind und wenig Übertragungskapazität erfordern. In Abhängigkeit des jeweiligen ersten oder zweiten Objektnamens führt der Datenbank-Prozess die Datenbankabfrage nach ersten bzw. zweiten Abfragekriterien aus.

Zweckmäßigerweise erbringt das Dienst-Objekt die verschiedenen Dienste jeweils in Abhängigkeit von Konfigurationsdaten, die den jeweils verwendeten Objektnamen zugeordnet sind. Somit kann das Erbringen von Diensten durch das Dienst-Objekt individuell konfiguriert werden, wobei eine Änderung der Konfiguration zur Anpassung an momentane Erfordernisse ohne Weiteres möglich ist.

Vorteilhafterweise könnte auch einem ersten und/oder einem zweiten Anforderungs-Objekt ein erster und ein zweiter Objektname zugeordnet werden. Das erste Anforderungs-Objekt und/oder das zweite Anforderungs-Objekt versenden dann an das Dienst-Objekt Anforderungsnachrichten, in denen der erste oder der zweite Objektname als Quellangabe angegeben sind. Das Dienst-Objekt erbringt in Abhängigkeit des jeweils in einer der Anforderungsnachrichten verwendeten ersten oder zweiten Objektnamens zumindest einen ersten bzw. einen zweiten Dienst.

In einer bevorzugten Variante der Erfindung ist einem Dienst-Objekt ein Anforderungs-Manager sozusagen vorgeschaltet. Eine von einem Anforderungs-Objekt versandte Anforderungsnachricht wird nicht unmittelbar an das Dienst-Objekt gesendet, sondern zunächst dem Anforderungs-Manager. Dieser ermittelt anhand des in der Anforderungsnachricht verwendeten Objektnamens, welchem Dienst-Objekt die Anforderungsnachricht oder eine daraus abgeleitete Anforderung zuzuleiten ist. Der Anforderungs-Manager leitet in Abhängigkeit von dem jeweiligen Objektnamen die Anforderungsnachricht auf einem dem jeweiligen Dienst-Objekt zugeordneten Übertragungskanal an dieses weiter, so dass das betreffende Dienst-Objekt aus dem jeweils verwendeten Übertragungskanal ermitteln kann, welchen Dienst es zu erbringen hat.

Es ist jedoch grundsätzlich auch möglich, dass der Anforderungs-Manager die Anforderungsnachrichten, die unterschiedliche Objektnamen als Adressinformation enthalten, an das Dienst-Objekt auf einem gemeinsamen Übertragungskanal sendet und der jeweiligen Anforderungsnachricht eine Kennung hinzufügt, welcher Dienst zu erbringen ist. Beispielsweise könnten zur Erbringung des Dienstes anzuwendende Konfigurationsdaten und/oder ein Hinweis auf bestimmte, durch das Dienst-Objekt einlesbare Konfigurationsdaten in der von dem Anforderungs-Manager an das Dienst-Objekt gesendeten Anforderungsnachricht angegeben sein.

In einer besonders bevorzugten Variante der Erfindung wird das Anforderungs-Objekt durch ein Management-Objekt gebildet und das Dienst-Objekt durch ein Diskriminator-Objekt. Das Diskriminator-Objekt sendet an das Management-Objekt Ereignismeldungen und/oder zumindest einen Ereigniszustand von mindestens einem durch das Management-Objekt verwalteten Objekt, vorzugsweise jedoch von mehreren verwalteten Objekten, die beispielsweise eine Vermittlungsstelle, einen Router oder einen Netzwerk-Dienst repräsentieren. Bei den Ereignismeldungen handelt es sich beispielsweise um Alarmmeldungen oder Änderungsmittelungen über neu von dem jeweiligen verwalteten Objekt geladene Konfigurationsdaten. Das Diskriminator-Objekt kann dabei beispielsweise die Funktionen eines eingangs erwähnten Event Forwarding Diskriminators (EFD) gemäß der Definition der ITU-Recommendation X.734 (ITU = International Telecommunication Union) leisten. Bei dem Management-Objekt handelt es sich beispielsweise um einen Rechner einer Netzwerk-Management-Zentrale oder einen durch einen solchen Rechner ausgeführten Netzwerk-Management-Prozess. Das Management-Objekt spricht das Diskriminator-Objekt unter verschiedenen Objektnamen an, beispielsweise unter einem ersten und einem zweiten Objektnamen. Erhält das Diskriminator-Objekt eine Anforderungsnachricht mit dem ersten Objektnamen, sendet es beispielsweise die Ereignismeldungen eines ersten verwalteten Objektes, und bei einer Anforderungsnachricht mit dem zweiten Objektnamen die Ereignismeldungen eines zweiten verwalteten Objektes.

In einer Fortbildung der obigen bevorzugten Variante wendet das Diskriminator-Objekt in Abhängigkeit des jeweils in der Anforderungsnachricht verwendeten Objektnamens unterschiedliche Filterkriterien zur Ermittlung der für das Management-Objekt relevanten Ereignisse aus den Ereignismeldungen und/oder aus dem zumindest einen Ereigniszustand an. Die Filterkriterien können beispielsweise als Konfigurationsdaten abgelegt sein oder, falls der erwähnte Anforderungs-Manager vorgesehen ist, z.B. auch von diesem in der jeweiligen Anforderungsnachricht angegeben werden.

In einer weiteren Fortbildung der obigen bevorzugten Variante sendet das Diskriminator-Objekt in Abhängigkeit des jeweils in der Anforderungsnachricht verwendeten Objektnamens eine Abfragenachricht an eines oder mehrere verwaltete Objekte zur Abfrage von deren jeweiligem Ereigniszustand. Das Diskriminator-Objekt ermittelt anhand des jeweiligen Objektnamens, an welches verwaltete Objekt eine derartige Abfragenachricht zu senden ist. Diese melden dann ihren jeweiligen Ereigniszustand an das Diskriminator-Objekt, das vorzugsweise in Abhängigkeit des von dem Management-Objekt verwendeten Objektnamens unterschiedliche Filterkriterien zur Ermittlung der für das Management-Objekt relevanten Ereignisse aus den Ereignismeldungen und/oder aus dem zumindest einen Ereigniszustand anwendet.

Es versteht sich, dass beliebige Kombinationen der in den Unteransprüchen sowie in der Beschreibung angegebenen Maßnahmen möglich sind.

Im Folgenden werden die Erfindung und ihre Vorteile anhand eines Ausführungsbeispiels unter Zuhilfenahme der Zeichnung dargestellt.
- Figur 1: zeigt eine schematische Anordnung zur Ausführung des erfindungsgemäßen Verfahrens mit Management-Objekten MO1, MO2, Diskriminator-Objekten DO1, DO2, verwalteten Objekten VO1, VO2 und VO3 und einem Anforderungs-Manager RM.

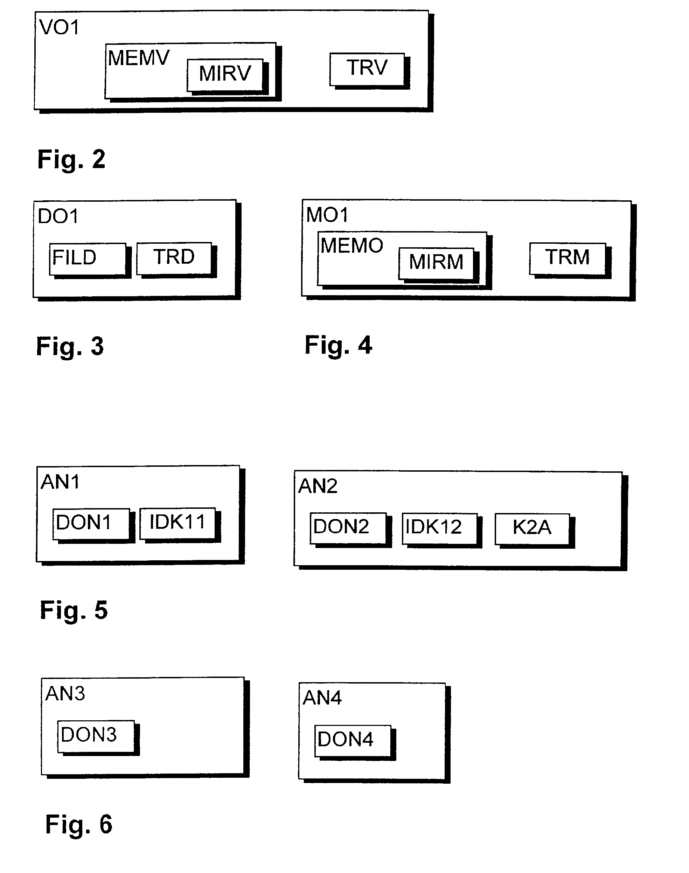

- Figur 2: zeigt schematisch und exemplarisch für die verwalteten Objekte VO1, VO2, VO3 das verwaltete Objekt VO1.
- Figur 3: zeigt schematisch und exemplarisch für die Diskriminator-Objekte DO1 und DO2 das Diskriminator-Objekt DO1.
- Figur 4: zeigt schematisch und exemplarisch für die Management-Objekte MO1, MO2 das Management-Objekt MO1.
- Figur 5: zeigt Anforderungsnachrichten AN1 und AN2.
- Figur 6: zeigt Anforderungsnachrichten AN3 und AN4.

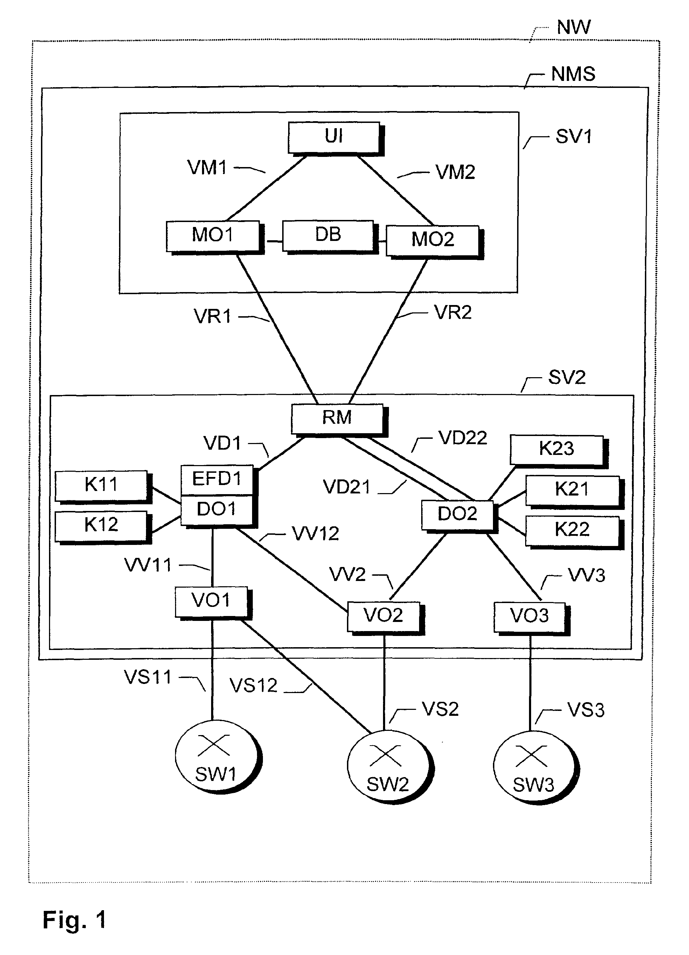

Figur 1 zeigt ein Telekommunikationsnetz NW mit Servern SV2 und SV1 eines Netzwerk-Management-Systems NMS mit einer offenen Systemarchitektur sowie Netzwerkeinrichtungen SW1, SW2 und SW3, die beispielsweise Vermittlungsstellen, Router oder Diensterechner zur Erbringung von Diensten eines Intelligenten Netzes (IN) sind. Die Netzwerkeinrichtungen SW1, SW2 und SW3 werden jeweils durch das Netzwerk-Management-System NMS verwaltet, gewartet und betrieben. Das Telekommunikationsnetz NW umfasst auch weitere, nicht dargestellte Einrichtungen, beispielsweise weitere Netzwerkeinrichtungen oder von den Netzwerkeinrichtungen SW1, SW2 und SW3 bediente Endgeräte. Die Netzwerkeinrichtungen SW1, SW2 und SW3 werden von sogenannten verwalteten Objekten (engl. managed objects) VO1, VO2 bzw. V03 repräsentiert. Die verwalteten Objekte VO1, VO2, VO3 sind vorliegend Prozesse oder Gruppen von Prozessen, deren Programmcode durch den Server SV2 ausgeführt wird und die von den Netzwerkeinrichtungen SW1, SW2 und SW3 an das Netzwerk-Management-System NMS gesendete Ereignisinformationen vorverarbeiten. Ferner können die Netzwerkeinrichtungen SW1, SW2 und SW3 über die verwalteten Objekte VO1, V02, V03 gesteuert werden. Die verwalteten Objekte VO1, VO2, VO3 sind beispielsweise sogenannte Proxy-Agenten, welche die Netzwerkeinrichtungen SW1, SW2 und SW3 für das Netzwerk-Management-System NMS zumindest in Bezug auf vorbestimmte Eigenschaften sozusagen simulieren. Ein Proxy-Agent setzt die von dem Netzwerk-Management-System NMS gesendeten Instruktionen so um, dass sie vom gemanagten Netzwerkeinrichtungen SW1, SW2 und SW3 verstanden werden. Die verwalteten Objekte VO1, VO2, VO3 können auch nur bestimmte Eigenschaften der Netzwerkeinrichtungen SW1, SW2 und SW3 repräsentieren, beispielsweise deren Alarme.

Es ist jedoch auch möglich, dass zur Steuerung der Netzwerkeinrichtungen SW1, SW2 und SW3 und zur Verarbeitung von deren Ereignisinformationen jeweils separate verwaltete Objekte vorgesehen sind. Weitere, den verwalteten Objekten VO1, VO2, VO3 ähnliche Objekte könnten vorgesehen sein, um einen Netzwerk-Dienst oder eine sonstige Ressource des Telekommunikationsnetzes NW zu repräsentieren. Ferner könnten mehrere verwaltete Objekte einer Ressource zugeordnet sein und diese unterschiedlich repräsentieren. Beispielsweise könnte das verwaltete Objekt VO1 die Alarme der Netzwerkeinrichtung SW1 und das verwaltete Objekt VO2 deren Messwerte oder deren aktuell geladene Konfigurationsdaten repräsentieren. Die verwalteten Objekte VO1, VO2, VO3 könnten auch unmittelbar durch die Netzwerkeinrichtungen SW1, SW2 bzw. SW3 gebildet werden oder von diesen ausgeführte Prozesse sein.

Zur Verwaltung, zum Betreiben und Warten der verwalteten Objekte VO1, VO2, V03 sind Management-Objekte MO1, MO2 vorgesehen, die als von dem Server SV1 ausgeführte Prozesse oder Gruppen von Prozessen ausgebildet sind. Es ist auch möglich, dass der Server SV1 selbst ein Management-Objekt bildet oder dass jedes der Management-Objekte MO1, MO2 ein durch einen separaten Rechner des Netzwerk-Management-Systems ausgeführter Prozess ist. In dem Server SV1 ist vorliegend ferner einer Bedienoberfläche UI vorgesehen, über die von den Netzwerkeinrichtungen SW1, SW2 und SW3 gemeldete Ereignisse, beispielsweise die Verletzung eines Grenzwertes oder eine Aktivierung neu geladener Konfigurationsdaten, auf einer Anzeigeeinrichtung, beispielsweise einem Monitor, sowie gegebenenfalls auch akustisch ausgegeben werden. Über die Bedienoberfläche Ul kann ein Bediener auch Befehle zur Steuerung der Netzwerkeinrichtungen SW1, SW2 und SW3 an diese senden, beispielsweise eine Verbindung aktivieren oder deaktivieren.

Bei den nicht näher dargestellten Servern SV1 und SV2 handelt es ich um Rechner oder Rechnernetzwerke, die durch ein UNIX-Betriebssystem oder ein Windows-NT-Betriebssystem betrieben werden. Die Server SV1 und SV2 weisen Sende- und Empfangsmittel auf, beispielsweise LAN oder WAN Schnittstellenkarten, Modems oder dergleichen, mit denen Daten gesendet bzw. empfangen werden können. Ferner sind jeweils Speichermittel, beispielsweise Festplatten und RAM-Bausteine, sowie Steuermittel vorgesehen, beispielsweise jeweils ein Prozessor oder ein Cluster von Prozessoren. Ein solches Steuermittel führt Befehle eines Betriebssystems aus, das in den Speichermitteln gespeichert ist. Weiterhin sind in den Speichermitteln Programmcode-Sequenzen von Programm-Modulen gespeichert, die von den Steuermitteln ausgeführt werden und die Funktionen der Server SV1 und SV2 steuern. Solche Programm-Module sind im Server die Management-Objekte MO1 und MO2 und die Bedienoberfläche Ul sowie im Server SV2 beispielsweise die verwalteten Objekte VO1 bis VO3. Die Sende- und Empfangsmittel, Steuermittel und Speichermittel der Server SV1 und SV2 sowie deren jeweilige interne Verbindungen untereinander sind in Figur 1 nicht dargestellt.

Die Netzwerkeinrichtungen SW1 und SW2 senden über Verbindungen VS11 bzw. VS12 Ereignisinformationen an die verwalteten Objekte VO1 bzw. VO2. Die Netzwerkeinrichtungen SW2 und SW3 senden über Verbindungen VS2 bzw. VS3 Ereignisinformationen an die verwalteten Objekte V02 bzw. VO3. Dabei melden die Netzwerkeinrichtungen SW1, SW2 und SW3 z.B. Grenzwertverletzungen, ihre aktuelle Systemlast oder Verkehrswerte von Verbindungen des Telekommunikationsnetzes NW. Die Ereignisinformationen werden beispielsweise als strukturierte Daten z.B. mit Hilfe der Basic Encoding Rules (BER) gemäß der Definitionen der International Telecommunication Union versandt. Die Ereignisinformationen zwischen den Netzwerkeinrichtungen SW1, SW2 und SW3 und den verwalteten Objekten VO1, VO2, VO3 können aber auch sogenannte Object-Request-Broker-Objekte (ORB) sein, z.B. gemäß der CORBA -Spezifikation (CORBA = Common Object Request Broker Architecture) der OMG (Object Management Group) oder der DCOM-Spezifikation der Firma Microsoft. Die Verbindungen VS11, VS12, VS2, VS3 sind lediglich schematisch dargestellt und führen vorzugsweise über ein separates Management-Netzwerk, beispielsweise über ein WAN (Wide-Area-Network).

Von den Netzwerkeinrichtungen SW1, SW2 und SW3 gesendete Ereignisinformationen werden von den verwalteten Objekten VO1, VO2, VO3 über Sende- und Empfangsmittel TRV empfangen und in einem Speichermittel MEMV gespeichert. Die Sende- und Empfangsmittel TRV sowie das Speichermittel MEMV sind vorliegend als entsprechende Programmfunktionen der verwalteten Objekte VO1, VO2, V03 ausgeführt. Somit ist in den verwalteten Objekte VO1, VO2, VO3 jeweils ein Abbild oder ein Spiegel MIRV der in den Netzwerkeinrichtungen SW1, SW2 und SW3 aufgetretenen Ereignisse abgelegt.

Die verwalteten Objekte VO1, VO2, VO3 melden die jeweiligen Ereignisinformationen als Ereignisinformations-Objekte über Verbindungen VV11, VV12 und VV2, VV3 an Diskriminator-Objekte DO1 bzw. DO2, die vorliegend ebenfalls als von dem Server SV2 ausgeführte Prozesse oder Agenten ausgebildet sind. Die Diskriminator-Objekte DO1, DO2 empfangen die Ereignisinformationen über Sende- und Empfangsmittel TRD und filtern die Ereignisinformationen anhand von Filterkriterien K11, K12, K21, K22 mit Hilfe von Filtermitteln FILD. Die Sende- und Empfangsmittel TRD sowie die Filtermittel FILD sind vorliegend als entsprechende Programmfunktionen der Diskriminator-Objekte DO1, DO2, DO3 ausgeführt und bilden Diensterbringungsmittel zur Erbringung von Diensten für die Management-Objekte MO1, MO2.

Beispielsweise filtert das Diskriminator-Objekt DO1 die für das Management-Objekt MO1 bestimmten, von dem verwalteten Objekt VO1 stammenden Ereignisinformationen anhand der Filterkriterien K11 und die für das Management-Objekt MO2 bestimmten, vom verwalteten Objekt V02 stammende Ereignisinformationen anhand der Filterkriterien K12. Die Filterkriterien K11, K12 und K21, K22 sind Attribute der Diskriminator-Objekte DO1 bzw. DO2 und werden z.B. als Diskriminator-Konstrukte bezeichnet. Die Filterkriterien K11, K12 und K21, K22 geben die Bedingungen an, denen von den verwalteten Objekten VO1, VO2, VO3 gesendete Ereignisinformationen genügen müssen, wenn sie an die Management-Objekte MO1, MO2 gesendet werden sollen. Die Filterkriterien K11, K12, K21, K22 können z.B. als von den Filtermitteln FILD anzuwendende Prüftabellen ausgestaltet sein oder als von den Filtermitteln FILD aufzurufende Prüffunktionen. Jedenfalls werden von den Filtermitteln FILD die für die Management-Objekte MO1, MO2 jeweils irrelevante Ereignisse betreffende Ereignisinformationen ausgefiltert, wobei beispielsweise eine unkritische Grenzwertverletzung oder ein zyklisch gemeldeter Messwert ausgesondert werden, während eine kritische Störung oder ein sonstiger Alarm weitergeleitet wird.

Die Diskriminator-Objekte DO1 und DO2 senden nicht ausgefilterte Ereignisinformationen über Verbindungen VD1 bzw. VD21, VD22 an einen Anforderungs-Manager RM, der die Ereignisinformationen über Verbindungen VR1 und VR2 an die Management-Objekte MO1 bzw. MO2 weitermeldet. Das Diskriminator-Objekt DO1 trägt in die von ihm gesendeten Ereignisinformationen lediglich eine logische Adresse der Management-Objekte MO1, MO2 ein, während ein dem Diskriminator-Objekt DO1 zum Anforderungs-Manager RM hin vorgeschaltetes Versende-Objekt EFD1, beispielsweise ein Event Forwarding Diskriminator (EFD) gemäß der ITU-Recommendation X.734 (ITU = International Telecommunication Union), eine der jeweiligen logischen Adresse zugeordnete physikalische Adresse in die jeweiligen Ereignisinformationen einträgt. Das Diskriminator-Objekt DO2 hingegen trägt ohne Mitwirkung eines Versende-Objektes bereits die notwendigen physikalischen Adressen ein.

Für das Diskriminator-Objekt DO1 kann beispielsweise vorgesehen sein, dass es an das Versende-Objekt EFD1 alle, also nicht nur die zum Versand sondern auch die zum Ausfiltern bestimmten Ereignisinformationen weiterleitet, diesen jedoch anhand der Filterkriterien K11 und K12 ermittelte Attribute "Versenden" oder "Nicht-Versenden" hinzufügt.

Es ist auch möglich, dass das ein Diskriminator-Objekt von verwalteten Objekten gesendete Ereignisinformationen zumindest teilweise dupliziert und mehrfach an ihm zugeordnete Management-Objekte versendet. Beispielsweise könnte das Diskriminator-Objekt DO1 von den verwalteten Objekten VO1, V02 gemeldete Ereignisinformationen jeweils an beide Management-Objekte MO1, MO2 senden. Das Diskriminator-Objekt DO1 erhält die Ereignisinformationen z.B. als Eingangsobjekte und ermittelt anhand der Filterkriterien K11 und K12, welche der Eingangsobjekte dem Management-Objekt MO1 und welche dem MO2 zuzusenden sind. Gegebenenfalls kopiert das Diskriminator-Objekt DO1 ein solches Eingangsobjekt, um es sowohl an das Management-Objekt MO1 als auch an das Management-Objekt MO2 zu senden. Jedenfalls fügt das Diskriminator-Objekt DO1 die logischen Adressen der Management-Objekte MO1, MO2 jeweils als Attribute zu den Eingangsobjekten hinzu und leitet diese dann dem Versende-Objekt EFD1 zu.

Die Management-Objekte MO1, MO2 empfangen die von den Diskriminator-Objekten DO1 und DO2 gesendeten Ereignisinformationen über Sende- und Empfangsmittel TRM und speichern die Ereignisinformationen beispielsweise in Ereignisspiegeln MIRM, die in ihren Speichermitteln MEMO vorgesehen sind. Im Ausführungsbeispiel speichern die Management-Objekte MO1, MO2 die Ereignisinformationen zusätzlich in einer Datenbank DB des Servers SV1. Ferner leiten die Management-Objekte MO1, MO2 die Ereignisinformationen beispielsweise über in dem Server SV1 vorgesehene interne, vorzugsweise als Interprozess-Verbindungen ausgestaltete Verbindungen VM1, VM2 an die Bedienoberfläche Ul zur Ausgabe für einen Bediener weiter. Die Sende- und Empfangsmittel TRM sowie die Speichermittel MEMO sind vorliegend als entsprechende Programmfunktionen der Management-Objekte MO1, MO2 ausgeführt.

Die Verbindungen VR1 und VR2 führen beispielsweise über ein die Server SV1 und SV2 verbindendes LAN (Local Area Network). Die Verbindungen VV11, VV12, VV2, VV3 sowie VD1, VD21, VD22 sind interne Verbindungen im Server SV2, die über physikalische, insbesondere aber über logische Übertragungskanäle führen, und werden beispielsweise über bekannte, z.B. vom Betriebssystem des Servers SV2 bereitgestellten Interprozess-Kommunikationsmechanismen hergestellt.

Zur Datenübertragung auf den Verbindungen VR1 und VR2 wird beispielsweise das CMIP-Protokoll (Common Management Information Protocol) der OSI (Open Systems Interconnection) oder das TCP/IP- basierte Simple Network Management Protocol (= SNMP; TCP/IP = Transmission Control Protocol / Internet Protocol) eingesetzt, die jeweils zum Transport von Managementinformationen geeignet sind.

Soweit die dargestellte spontane Übermittlung von Ereignisinformationen durch die Netzwerkeinrichtungen SW1, SW2 und SW3 an die Management-Objekte MO1, MO2 störungsfrei verläuft, sind in dem Server SV1 die Ereigniszustände der Netzwerkeinrichtungen SW1, SW2 und SW3 bekannt. Fallen jedoch beispielsweise die Verbindungen VR1, VR2 aufgrund einer Leitungsstörung kurzeitig aus, gehen möglicherweise von den Netzwerkeinrichtungen SW1, SW2 und SW3 spontan gemeldete Ereignisinformationen verloren.

Wenn die Management-Objekte MO1, MO2 z.B. von einem nicht dargestellten Überwachungsprozess des Servers SV1 eine Meldung erhalten, dass eine solche Leitungsstörung "gehend" ist, also nicht mehr vorliegt, senden sie Anforderungsnachrichten zur Abfrage der Ereigniszustände der verwalteten Objekte VO1, VO2, V03 an die Diskriminator-Objekte DO1 und DO2, um somit beispielsweise ihre Ereignisspiegel MIRM und die Datenbank DB wieder zu aktualisieren.

Dabei bilden die Diskriminator-Objekte DO1 bzw. DO2 Dienst-Objekte und die Management-Objekte MO1, MO2 Anforderungs-Objekte, wobei die Dienst-Objekte Dienste für die Anforderungs-Objekte erbringen. Die Management-Objekte MO1, MO2 könnten auch als Manager, die Diskriminator-Objekte DO1 und DO2 als Agenten bezeichnet werden.

Es ist auch möglich, dass von der Bedienoberfläche Ul Befehle an die Management-Objekte MO1, MO2 gesendet werden, die an die Diskriminator-Objekte DO1 und DO2 gerichtete Anforderungsnachrichten auslösen. Weiter könnten auch die Diskriminator-Objekte DO1 und DO2 und/oder die verwalteten Objekte VO1, V02, V03 an die Management-Objekte MO1, MO2 melden, dass eine Divergenz zwischen den jeweiligen Ereignisspiegeln MIRV bzw. MIRM aufgetreten ist, worauf dann die Management-Objekte MO1, MO2 entsprechende Anforderungsnachrichten zur Ereigniszustandsabfrage an die Diskriminator-Objekte DO1 und DO2 senden.

Ferner könnte ein in dem Server SV1 und/oder in dem Server SV2 vorgesehenes zeitgesteuertes Steuerprogramm Anforderungsnachrichten versenden. Das zeitgesteuerte Steuerprogramm sendet die Anforderungsnachrichten zu vorbestimmten Zeitpunkten, beispielsweise einmal stündlich oder an einigen Wochentagen an die Diskriminator-Objekte DO1 und DO2. Das zeitgesteuerte Steuerprogramm könnte ein als separater Prozess ausgeführter, sogenannter externer Scheduler sein oder auch ein interner Scheduler, der z.B. als eine Programmfunktion in das Management-Objekt MO1 oder in das Diskriminator-Objekt DO1 integriert ist.

Am Beispiel von Anforderungsnachrichten AN1 und AN2, mit denen das Management-Objekt MO1 bei dem Diskriminator-Objekt DO1 die Ereigniszustände der verwalteten Objekte VO1 bzw. V02 anfordert, soll im Folgenden eine erste Variante zur Bearbeitung von derartigen Anforderungsnachrichten dargestellt werden. Bei den Anforderungsnachrichten AN1 und AN2 handelt es sich beispielsweise um sogenannte "GET"-, "EVENT-REPORT"- oder "ACTION"-Nachrichten, die im Rahmen der Common Management Information Services (CMIS) definiert sind oder um entsprechende SNMP-Anforderungsnachrichten. Es ist auch möglich, dass die Anforderungsnachrichten AN1 und AN2 in sonstiger Form von Objekten versandt werden, beispielsweise in Form von CORBA-Objekten. Zur Übertragung der Objekte kann dann das durch die bereits erwähnte OMG definierte Internet InterObjectRequestBroker Protocol (IIOP) eingesetzt werden, das im Rahmen des TCP/IP übertragen werden kann (TCP/IP = Transmission Control Protocol / Internet Protocol). Ferner könnten die Anforderungsnachrichten AN1 und AN2 auch sogenannte Remote-Procedure-Calls (RPCs) sein, mit denen das Management-Objekt MO1 die als Prozesse oder "Prozeduren" ausgebildeten verwalteten Objekte VO1 bzw. V02 im Server SV2 aufruft.

Das Management-Objekt MO1 sendet die Anforderungsnachrichten AN1 und AN2 über die Verbindung VR1 an den Anforderungs-Manager RM, der die Anforderungsnachrichten AN1 und AN2 mit nicht näher dargestellten, beispielsweise als Programmfunktionen gestalteten Sende- und Empfangsmitteln empfängt und an das Diskriminator-Objekt DO1 weiterleitet. In der Anforderungsnachricht AN1 ist "DON1" als Objektnamen und somit als Adressangabe für das Diskriminator-Objekt DO1 angegeben, in der Anforderungsnachricht AN2 als Objektnamen und Adressangabe "DON2". Die Objektnamen DON1 und DON2 sind dem Diskriminator-Objekt DO1 zugeordnet und dienen zu dessen logischer Adressierung. Aus Sicht des Management-Objektes MO1 existieren dabei zwei Dienst-Objekte: ein mit DON1 bezeichnetes Diskriminator-Objekt, das als Dienst den Ereigniszustand des verwalteten Objektes VO1 abfragt, und ein mit DON2 bezeichnetes Diskriminator-Objekt, das als Dienst den Ereigniszustand des verwalteten Objektes V02 abfragt. Die Sende- und Empfangsmittel TRM des Management-Objekts MO1 tragen in Abhängigkeit von dem jeweils geforderten Dienst die Objektnamen DON1 bzw. DON2 in die jeweilige Anforderungsnachricht ein.

Der Anforderungs-Manager RM ermittelt anhand der Objektnamen DON1 bzw. DON2 z.B. mit Hilfe einer Zuordnungstabelle Objektnamen-zu-Dienst-Objekt und/oder einem vorbestimmten Zuordnungsalgorithmus, dass die Anforderungsnachrichten AN1 und AN2 für das Diskriminator-Objekt DO1 bestimmt sind. Dabei ist es auch möglich, dass der Anforderungs-Manager RM eine zusätzliche Kennung in die Anforderungsnachrichten AN1 und AN2 einfügt, anhand derer das Diskriminator-Objekt DO1 den jeweils zu erbringende Dienst ermitteln kann.

Das Diskriminator-Objekt DO1 empfängt die Anforderungsnachrichten AN1 und AN2 mit seinen Sende- und Empfangsmitteln TRD. Anhand der als Kennung dienenden Objektnamen DON1 und DON2 erkennt das Diskriminator-Objekt DO1, welchen Dienst es erbringen soll, nämlich dass es dem Management-Objekt MO1 die Ereigniszustände der verwalteten Objekte VO1 bzw. V02 berichten soll. Eine entsprechende Zuordnung der Objektnamen DON1 und DON2 zu einem jeweils zu erbringenden Dienst ist vorteilhafterweise in den Konfigurationsdaten des Diskriminator-Objekts DO1 abgelegt.

Das Diskriminator-Objekt DO1 sendet zur Bearbeitung der Anforderungsnachrichten AN1 und AN2 über die Verbindungen VV11 bzw. VV12 jeweils eine Abfragenachricht zur Abfrage des Ereigniszustandes der verwalteten Objekte VO1 bzw. VO2. Diese melden die in ihren jeweiligen Ereignisspiegeln MIRV abgelegten Ereigniszustände der Netzwerkeinrichtungen SW1 bzw. SW2 in einzelnen Ereigniszustands-Nachrichten oder in einem zusammenhängenden Ereigniszustandsbericht an das Diskriminator-Objekt DO1. Es ist auch möglich, dass die verwalteten Objekte VO1, V02 zudem noch Abfragenachrichten an die Netzwerkeinrichtungen SW1, SW2 zur Abfrage von deren jeweils aktuellen Ereigniszuständen, beispielsweise zur Abfrage von Störungen, versendet.

Das Diskriminator-Objekt DO1 empfängt die Ereigniszustandsnachrichten über seine Sende- und Empfangsmittel TRD und überprüft mit Hilfe der Filtermittel FILD, ob die Ereigniszustands-Nachrichten für das Management-Objekt MO1 relevante Ereignisse betreffen. Die Filtermittel könnten in der erwähnten Weise die Filterkriterien K11 und K12 verwenden, um die von den verwalteten Objekten VO1 bzw. V02 stammenden Ereigniszustandsnachrichten zu filtern. Die Objektnamen DON1 und DON2 wären dabei Kennungen zur Ermittlung der zu verwendenden Filterkriterien K11 bzw. K12, die Bestandteil der Konfigurationsdaten für das Diskriminator-Objekt DO1 sind. Vorliegend sind jedoch in den Anforderungsnachrichten AN1 und AN2 eigens Kennungen IDK11 bzw. IDK12 angegeben, die das Diskriminator-Objekt DO1 zur Verwendung der Filterkriterien K11 bzw. K12 für die von den verwalteten Objekten VO1 bzw. V02 gemeldeten Ereigniszustandsnachrichten anweist. Zusätzlich sind in der Anforderungsnachricht AN2 noch weitere Filterkriterien K2A angegeben, die zur Filterung von Ereigniszuständen heranzuziehen sind. Beispielsweise kann in den Filterkriterien K2A bestimmt sein; dass nur Alarmzustände, jedoch keine Messwerte des verwalteten Objektes V02 an das Management-Objekt MO1 zu berichten sind.

In den Anforderungsnachrichten AN1 und AN2 können auch weitere, nicht näher erläuterte Angaben enthalten sein, beispielsweise die Adresse des Management-Objektes MO1, die als Zieladresse zur Rückmeldung der Ereigniszustände dient.

Wenn in einer Ereigniszustandsnachricht der Zustand eines für das Management-Objekt MO1 irrelevanten Ereignisses enthalten ist, wird sie ausgefiltert, ansonsten der Ereigniszustand an das Management-Objekt MO1 über den Anforderungs-Manager RM berichtet. Die jeweilige Nachricht wird durch das Diskriminator-Objekt DO1 gegebenenfalls in eine für das Management-Objekt MO1 verständliche Nachrichtenform umformatiert.

Im vorliegenden Beispiel melden die verwalteten Objekte VO1 und V02 jeweils nur aktuell gültige Ereigniszustände. Prinzipiell könnte auch das Diskriminator-Objekt DO1 überprüfen, ob ein gemeldeter Ereigniszustand aktuell gültig ist. Wenn beispielsweise Messwerte zyklisch zu übermitteln sind, kann anhand einer einem jeweiligen Messwert hinzugefügten Zeitinformation festgestellt werden, ob ein vorbestimmter Übertragungszyklus für den Messwert eingehalten worden ist.

Das Management-Objekt MO1 empfängt die Ereigniszustandsnachrichten oder die Ereigniszustandsberichte von dem Diskriminator-Objekt DO1 über seine Sende- und Empfangsmittel TRM und aktualisiert die jeweiligen Ereignisse in seinem Ereignisspiegel MIRM sowie in der Datenbank DB. In dem Management-Objekt MO1 können dabei Mittel zur Plausibilitätskontrolle der Ereignisse vorgesehen sein, beispielsweise könnten Zeitinformationen, die einem gemeldeten Ereigniszustand beigefügt sind, mit zu einem gespeicherten Ereigniszustand abgelegten Zeitinformationen verglichen werden. Ferner könnten die Mittel zur Plausibilitätskontrolle eine Abweichung von einem im Ereignisspiegel MIRM Zustand eines Ereignisses zu einem von dem Diskriminator-Objekt DO1 gemeldeten Ereigniszustand ermitteln. Tritt eine solche Abweichung ein, wird beispielsweise einerseits eine Warnmeldung an der Bedienoberfläche Ul ausgegeben und andererseits eine Sicherheitsabfrage an das den Ereigniszustand meldende verwaltete Objekt und/oder das Diskriminator-Objekt gesendet, in der diese zu einer Überprüfung angewiesen werden, ob die gemeldete Abweichung des Ereigniszustandes zutreffend ist.

Am Beispiel von Anforderungsnachrichten AN3 und AN3, mit denen das Management-Objekt MO2 bei dem Diskriminator-Objekt DO2 die Ereigniszustände der Netzwerkeinrichtungen SW2 bzw. SW3 anfordert, soll im Folgenden eine zweite Variante zur Bearbeitung von durch ein Anforderungs-Objekt an ein Dienst-Objekt gesendeten Anforderungsnachrichten dargestellt werden.

Das Management-Objekt MO2 sendet die Anforderungsnachrichten AN3 und AN4, in denen die Objektnamen DON3 bzw. DON4 als logische Adressen angegeben sind, an den Anforderungs-Manager RM. Aus Sicht des als Anforderungs-Objekt agierenden Management-Objektes MO2 existieren dabei zwei unabhängige Dienst-Objekte DON3 und DON4. Den logischen Dienst-Objekten DON3 und DON4 sind die Verbindungen VD21 bzw. VD22 als logischen Übertragungskanäle zugeordnet. Der Anforderungs-Manager RM ermittelt beispielsweise anhand einer Zuordnungsliste Objektnamen-zu-Übertragungskanal, dass er die Anforderungsnachricht AN3 auf der Verbindung VD21 und die Anforderungsnachricht AN4 auf der Verbindung VD22 an das Diskriminator-Objekt DO2 senden soll.

Das Diskriminator-Objekt DO2 ermittelt daraus, dass es die Anforderungsnachricht AN3 auf der Verbindung V21 erhält, dass es einen ersten Dienst für das Management-Objekt MO2 erbringen soll, nämlich das Melden des Ereigniszustandes des verwalteten Objektes VO2. Dementsprechend sendet es eine Abfrage- oder Anforderungsnachricht über die Verbindung VV2 an das verwaltete Objekt V02, die dieses mit einer oder mehreren Nachrichten über seinen Ereigniszustand beantwortet. Diese Nachrichten filtert das Diskriminator-Objekt DO2 anhand der Filterkriterien K21, die für auf der Verbindung VD21 erhaltene Anforderungsnachrichten anzuwenden sind.

Enstprechendes gilt für die auf der Verbindung VD22 erhaltene Anforderungsnachricht AN4, in der ein zweiter Dienst bei dem Diskriminator-Objekt DO2 angefordert wird: das Abfragen des Ereigniszustandes des verwalteten Objektes VO3.

Das Diskriminator-Objekt DO2 fragt daher über die Verbindung VV3 diesen Ereigniszustand ab und filtert die daraufhin erhaltenen Antwort-Nachrichten mit Hilfe der Filterkriterien K22, die auf der Verbindung VD22 erhaltenen Anforderungsnachrichten zugeordnet sind.

Die von dem Diskriminator-Objekt DO2 an das Management-Objekt MO2 berichteten, den Filterkriterien K21 und K22 genügenden Ereignisinformationen trägt das Management-Objekt MO2 in der bereits erwähnten Weise in seinen Ereignisspiegel MIRM ein.

Allein anhand der Zuordnung jeweils eines logischen Übertragungskanals VD21 und VD22 zu einem zu erbringenden Dienst kann das Diskriminator-Objekt DO2 diesen Dienst ermitteln. Daher könnten die Anforderungsnachrichten AN3 und AN4 oder daraus abgeleitete Anforderungsnachrichten prinzipiell auch ohne die Objektnamen DON3 bzw. DON4 als Identifizierer für den zu erbringenden Dienst von dem Anforderungs-Manager RM an das Diskriminator-Objekt DO2 gesendet werden.

Es ist auch möglich, dass ein Diskriminator-Objekt auf einem Übertragungskanal unterschiedliche Dienste betreffende und/oder unterschiedliche Management-Objekte betreffende Anforderungsnachrichten erhält. Beispielsweise könnte das Diskriminator-Objekt DO2 auf der Verbindung VD21 die Anforderungsnachrichten AN3 und AN2 erhalten, die jeweils eine Abfrage des Ereigniszustandes des verwalteten Objektes V02 betreffen und in denen die Adresse der Management-Objekte MO2 bzw. MO1 als Quell-/Zielkennung angegeben ist. Das Diskriminator-Objekt DO2 fragt dann in der erläuterten Weise bei dem verwalteten Objekt V02 dessen Ereigniszustand ab. Die daraufhin erhaltenen Ereignisinformationen filtert das Diskriminator-Objekt DO2 anhand der Filterkriterien K21, soweit sie die Quell/Zielkennung MO2, also das Management-Objekt MO2 betreffen, und anhand von Filterkriterien K23, soweit sie das Management-Objekt MO1 betreffen.

Varianten und Weiterbildungen der Erfindung sind ohne Weiteres möglich:

Die Diskriminator-Objekte DO1 und DO2 könnten lediglich zur Abfrage von Ereigniszuständen bei den verwalteten Objekten VO1, V02, V03 vorgesehen sein. Für spontan von diesen gesendete Ereignismeldungen könnten separate Objekte oder Agenten vorgesehen sein, beispielsweise EFDs.

Die als Dienst-Objekte dienenden Diskriminator-Objekte DO1 und DO2 könnten den jeweils zu erbringenden Dienst, im Ausführungsbeispiel die für die Ereigniszustandsberichte anzuwendenden Filterkriterien auch aus einer Quellkennung der als Anforderungs-Objekte agierenden Management-Objekte MO1, MO2 ableiten. Wenn das Diskriminator-Objekt DO1 z.B. eine Anforderungsnachricht von dem Management-Objekt MO1 erhält, sendet es alle das verwaltete Objekt VO1 betreffenden Ereigniszustände, während es bei einer von dem Management-Objekt MO2 gesendeten Anforderungsnachricht, gegebenenfalls mit derselben Adresse für das Diskriminator-Objekt DO1 wie in der von dem Management-Objekt MO1 gesendeten Anforderungsnachricht, lediglich eine Auswahl von Ereigniszuständen sendet, beispielsweise besonders kritische Alarmzustände. Allgemeine Informationen hingegen, z.B. zyklischen Messwerte, werden anhand nicht dargestellter Filterkriterien ausgesondert.

Die als logische Dienst-Objekte agierenden Diskriminator-Objekte DO1 und DO2 könnten jeweils als eine Kaskade von Prozessen oder Agenten aufgebaut sein, wobei jeweils z.B. ein zentraler Steuerungsprozess oder Steuerungsagent die von den als Anforderungs-Objekte agierenden Management-Objekten MO1, MO2 Anforderungsnachrichten erhält und je nach gefordertem Dienst, an Sub-Prozesse oder Sub-Agenten weiterverteilen.

Die Diskriminator-Objekte DO1 und DO2 könnten ganz oder in Teilfunktionen teilweise in die verwalteten Objekte VO1, VO2, VO3 integriert sein.

Die Funktionen der Diskriminator-Objekte DO1 und DO2 können durch die Management-Objekte MO1, MO2 und/oder durch den Anforderungs-Manager RM steuerbar ausgestaltet sein. Beispielsweise könnte das spontane Senden von Ereignismeldungen durch die Diskriminator-Objekte DO1 und DO2 von den Management-Objekten MO1, MO2 gesperrt oder freigegeben werden.

Weiter könnten die Diskriminator-Objekte DO1 und DO2 ihren jeweiligen Status an die Management-Objekte MO1, MO2 und/oder den Anforderungs-Manager RM melden. Beispielsweise könnten die Diskriminator-Objekte DO1 und DO2 ihr Entstehen (engl. object creation), ihre Zerstörung (engl. object deletion), ihren Arbeitszustand (operational oder non-operational) oder eine Änderung in ihren Konfigurationsdaten oder Attributen (engl. attribute value change) melden.

Die Management-Objekte MO1, MO2, derAnforderungs-Manager RM, die Diskriminator-Objekte DO1 und DO2 und die verwalteten Objekte VO1, VO2, V03 könnten jeweils einzeln oder in Gruppen von separaten, örtlich voneinander entfernten Rechnern oder Rechnernetzwerken ausgeführt werden. Weiter könnten andere Zuordnungen vorgesehen sein. Beispielsweise könnten das Management-Objekt MO1 und das Diskriminator-Objekt DO2 dem Server SV1 und das Management-Objekt MO2 und das Diskriminator-Objekt DO1 dem Server SV2 zugeordnet sein. Zum Abgleich der jeweils in den Servern SV1 und SV2 gespeicherten Ereigniszustände könnten dann das Management-Objekt MO1 an das Diskriminator-Objekt DO2 Anforderungsnachrichten und das Management-Objekt MO2 an das Diskriminator-Objekt DO1 Anforderungsnachrichten senden.

Ferner könnten die Server SV1 und SV2 separaten, aber miteinander vernetzten Netzwerk-Management-Systemen angehören.

Anders als in den gezeigten Beispielen, bei denen die Management-Objekte, die verwalteten Objekte und die Diskriminator-Objekte jeweils als Prozesse oder Prozessgruppen ausgebildet sind, deren Programmcode von einem Rechner oder Rechnernetzwerk ausgeführt wird, könnten die Objekte auch sozusagen durch Hardware gebildet werden. Beispielsweise könnten die verwalteten Objekte VO1 und V02 durch die Netzwerkeinrichtung SW1 bzw. SW2 gebildet werden und das Diskriminator-Objekt DO1 ein den verwalteten Objekte VO1, VO2 zugeordneter Server.

Es versteht sich, dass nicht nur die im Ausführungsbeispiel erläuterten Management-Objekte und Diskriminator-Objekte als erfindungsgemäße Anforderungs-Objekte bzw. Dienst-Objekte dienen können. Beispielsweise könnte auch ein verwaltetes Objekt ein Dienst-Objekt bilden und je nach dem, unter welchen Objektnamen es adressiert wird, beispielsweise Nachrichten mit zyklischen Messwerten oder mit Alarmmeldungen versenden. Ferner könnte auch ein Dienst-Objekt für ein Telekommunikationsnetz, das beispielsweise in einem Intelligenten Netz Rufumleitungen steuert, je nach Objektnamen, mit dem es aufgerufen wird, verschiedenartige Funktionen leisten, z.B. Rufumleitungen auf unterschiedliche Ziele lenken.

## Patentansprüche

1. Verfahren zur Erbringung von Diensten, insbesondere in einem Netzwerk-Management-System (NMS) mit einer offenen Systemarchitektur, bei dem
- einem Dienst-Objekt (DO1, DO2) zumindest ein erster und ein zweiter Objektname (DON1, DON2, DON3, DON4) zugeordnet werden,
- ein Anforderungs-Objekt (MO1, MO2) an das Dienst-Objekt (DO1, DO2) eine Anforderungsnachricht (AN1, AN2, AN3, AN4) versendet, in der der erste oder der zweite Objektname (DON1, DON2, DON3, DON4) als Adressangabe für das Dienst-Objekt (DO1, DO2) angegeben sind und
- das Dienst-Objekt (DO1, DO2) in Abhängigkeit des jeweils in der Anforderungsnachricht (AN1, AN2, AN3, AN4) verwendeten ersten oder zweiten Objektnamens (DON1, DON2, DON3, DON4) zumindest einen ersten bzw. einen zweiten Dienst erbringt.

2. Verfahren nach Anspruch 1, **dadurch gekennzeichnet, dass** das Dienst-Objekt (DO1, DO2) zur Erbringung des ersten Dienstes und/oder des zweiten Dienstes in Abhängigkeit von ersten bzw. zweiten Konfigurationsdaten (K11, K12, K21, K22, K23) erbringt.

3. Verfahren nach Anspruch 1, **dadurch gekennzeichnet, dass** das Anforderungs-Objekt (MO1, MO2) die Anforderungsnachricht (AN1, AN2, AN3, AN4) über einen Anforderungs-Manager (RM) an das Dienst-Objekt (DO1, DO2) versendet und dass der Anforderungs-Manager (RM) die Anforderungsnachricht (AN1, AN2, AN3, AN4) oder eine daraus abgeleitete Anforderung über einen ersten bzw. einen zweiten, insbesondere logischen Übertragungskanal (VD21, VD22) an das Dienst-Objekt (DO1, DO2) weiterleitet, die dem ersten bzw. zweiten Objektnamen (DON1, DON2, DON3, DON4) zugeordnet sind, und dass das Dienst-Objekt (DO1, DO2) in Abhängigkeit des jeweils für die Anforderungsnachricht (AN1, AN2, AN3, AN4) verwendeten ersten oder zweiten Übertragungskanals (VD21, VD22) den ersten bzw. den zweiten Dienst erbringt.

4. Verfahren nach Anspruch 1, **dadurch gekennzeichnet, dass** das Dienst-Objekt (DO1, D02) zur Erbringung des ersten und/oder zweiten Dienstes zumindest ein weiteres Objekt (VO1, VO2, VO3), insbesondere ein durch das Anforderungs-Objekt (MO1, MO2) verwaltetes Objekt (VO1, VO2, VO3) aufruft.

5. Verfahren nach Anspruch 1, **dadurch gekennzeichnet, dass** das Anforderungs-Objekt (MO1, MO2) durch ein Management-Objekt (MO1, MO2) und das Dienst-Objekt (DO1, DO2) durch ein Diskriminator-Objekt (DO1, DO2) gebildet wird, und dass das Diskriminator-Objekt (DO1, DO2) dem Management-Objekt (MO1, MO2) Ereignismeldungen und/oder zumindest einen Ereigniszustand zumindest eines (ersten) durch das Management-Objekt (MO1, MO2) verwalteten Objektes (VO1, VO2, VO3) sendet.

6. Verfahren nach Anspruch 5, **dadurch gekennzeichnet, dass** das Diskriminator-Objekt (DO1, DO2) in Abhängigkeit des jeweils in der Anforderungsnachricht (AN1, AN2, AN3, AN4) verwendeten ersten oder zweiten Objektnamens (DON1, DON2, DON3, DON4) erste bzw. zweite Filterkriterien (K11, K12, K21, K22, K23; K2A) zur Ermittlung der für das Management-Objekt (MO1, MO2) relevanten Ereignisse aus den Ereignismeldungen und/oder aus dem zumindest einen Ereigniszustand anwendet.

7. Verfahren nach Anspruch 5, **dadurch gekennzeichnet, dass** das Diskriminator-Objekt (DO1, DO2) in Abhängigkeit des jeweils in der Anforderungsnachricht (AN1, AN2, AN3, AN4) verwendeten ersten oder zweiten Objektnamens (DON1, DON2, DON3, DON4) eine Abfragenachricht an das mindestens eine erste verwaltete Objekt (VO1, VO2, VO3) und/oder an ein zweites verwaltetes Objekt (VO1, VO2, VO3) zur Abfrage von deren jeweiligem mindestens einen Ereigniszustand sendet.

8. Dienst-Objekt (DO1, DO2) zur Erbringung von Diensten, insbesondere in einem Netzwerk-Management-System (NMS) mit einer offenen Systemarchitektur,
- dem zumindest ein erster und ein zweiter Objektname (DON1, DON2, DON3, DON4) zugeordnet sind,
- das Empfangsmittel (TRD) zum Empfangen einer Anforderungsnachricht (AN1, AN2, AN3, AN4) aufweist, in der der erste oder der zweite Objektname (DON1, DON2, DON3, DON4) als Adressangabe für das Dienst-Objekt (DO1, DO2) angegeben sind, und
- das Diensterbringungsmittel (FILD) zur Erbringung zumindest eines ersten oder eines zweiten Dienstes in Abhängigkeit des jeweils in der Anforderungsnachricht (AN1, AN2, AN3, AN4) verwendeten ersten bzw. zweiten Objektnamens (DON1, DON2, DON3, DON4) aufweist.

9. Dienst-Objekt (DO1, DO2) nach Anspruch 8, **dadurch gekennzeichnet, dass** es Programmcode enthält, der von einem Steuermittel eines Servers ausgeführt werden kann.

10. Anforderungs-Objekt (MO1, MO2) zur Nutzung von Diensten, insbesondere in einem Netzwerk-Management-System (NMS) mit einer offenen Systemarchitektur, mit Sendemitteln (TRM) zum Senden mindestens einer Anforderungsnachricht (AN1, AN2, AN3, AN4) für einen ersten und/oder einen zweiten von einem Dienst-Objekt (DO1, DO2) zu erbringenden Dienst, wobei die Sendemittel (TRM) derart ausgestaltet sind, dass das Anforderungs-Objekt (MO1, MO2) in der mindestens einen Anforderungsnachricht (AN1, AN2, AN3, AN4) einen ersten oder einen zweiten, dem Dienst-Objekt (DO1, DO2) jeweils zugeordneten Objektname (DON1, DON2, DON3, DON4) als Adressangabe für das Dienst-Objekt (DO1, DO2) in Abhängigkeit von dem durch das Dienst-Objekt (DO1, DO2) jeweils zur erbringenden ersten bzw. zweiten Dienst angeben kann.

11. Anforderungs-Objekt (MO1, MO2) nach Anspruch 10, **dadurch gekennzeichnet, dass** es Programmcode enthält, der von einem Steuermittel eines Servers ausgeführt werden kann.

12. Anforderungs-Manager (RM) zur Erbringung von Diensten, insbesondere in einem Netzwerk-Management-System (NMS) mit einer offenen Systemarchitektur,
- mit Empfangsmitteln zum Empfangen einer von einem Anforderungs-Objekt (MO1, MO2) an ein Dienst-Objekt (DO1, DO2) gesendeten Anforderungsnachricht (AN1, AN2, AN3, AN4), in der Abhängigkeit eines jeweils in der Anforderungsnachricht (AN1, AN2, AN3, AN4) als Adressangabe verwendeten ersten und/oder zweiten, dem Dienst-Objekt (DO1, DO2) zugeordneten Objektnamens (DON1, DON2, DON3, DON4) zumindest ein erster bzw. ein zweiter Dienst von dem Dienst-Objekt (DO1, DO2) angefordert wird,
- mit Sendemitteln zum Senden der Anforderungsnachricht (AN1, AN2, AN3, AN4) oder einer daraus abgeleiteten Anforderung über einen ersten bzw. einen zweiten, insbesondere logischen Übertragungskanal (VD21, VD22) an das Dienst-Objekt (DO1, DO2), die dem ersten bzw. zweiten Objektnamen (DON1, DON2, DON3, DON4) zugeordnet sind, so dass das Dienst-Objekt (DO1, DO2) in Abhängigkeit des jeweils für die Anforderungsnachricht (AN1, AN2, AN3, AN4) verwendeten ersten oder zweiten Übertragungskanals (VD21, VD22) den ersten bzw. den zweiten Dienst erbringen kann.

13. Anforderungs-Manager (RM) nach Anspruch 12, **dadurch gekennzeichnet, dass** es Programmcode enthält, der von einem Steuermittel eines Servers ausgeführt werden kann.

14. Speichermittel, insbesondere Diskette oder CD-ROM, Digital Versatile Disc, Festplattenlaufwerk oder dergleichen, mit einem darauf gespeicherten Dienst-Objekt (DO1, DO2) nach Anspruch 9 und/oder mit einem darauf gespeicherten Anforderungs-Objekt (MO1, MO2) nach Anspruch 11 und/oder mit einem darauf gespeicherten Anforderungs-Manager (RM) nach Anspruch 13.
